# FASCICULE DE BREVET EUROPEEN

(11) **EP 3 587 245 B1**
(45) Date de publication et mention de la délivrance du brevet: **07.04.2021**
(21) Numéro de dépôt: 19182336.8
(22) Date de dépôt: 25.06.2019
(51) Int. Cl.: B64C 1/16, B64C 21/06, B64D 27/20, F02K 3/062, B64D 29/06, F02C 3/107

(54) **GROUPE PROPULSEUR D'AERONEF COMPRENANT UN ASSEMBLAGE D'AU MOINS DEUX ARBRES COAXIAUX, L'UN ETANT RELIE A LA SOUFFLANTE ET L'AUTRE A L'ENSEMBLE D'AUBES FIXES**
ANTRIEBSGRUPPE EINES LUFTFAHRZEUGS, DIE EINE ANORDNUNG AUS MINDESTENS ZWEI KOAXIALEN WELLEN UMFASST, VON DENEN EINE MIT DEM GEBLÄSE VERBUNDEN IST UND DIE ANDERE MIT DER ANORDNUNG DER FESTEN LAUFRADSCHAUFELN
PROPELLANT UNIT OF AN AIRCRAFT COMPRISING AN ASSEMBLY OF AT LEAST TWO COAXIAL SHAFTS, ONE BEING CONNECTED TO THE FAN AND THE OTHER TO THE ASSEMBLY OF FIXED VANES

(30) Priorité: 29.06.2018 FR 1856035
(43) Date de publication de la demande: 01.01.2020
(73) Titulaire: Airbus Operations, 31060 Toulouse (FR)
(72) Inventeur: Negulescu, Camil, 31400 Toulouse (FR)
(74) Mandataire: Santarelli

(56) Documents cités:
- EP-A1- 3 121 430
- EP-A1- 3 153 401
- US-A1- 2017 081 013

## Description

L'invention concerne les groupes propulseurs d'aéronefs et plus spécifiquement leur architecture et leur implantation sur un aéronef.

Les aéronefs commerciaux présentent le plus souvent une architecture générale présentant un fuselage, une voilure comportant deux ailes et un empennage arrière. De tels aéronefs comportent en outre un ou plusieurs groupes propulseurs, les plus communément employés étant des turboréacteurs. Les groupes propulseurs peuvent être implantés sur l'aéronef selon différentes configurations. Le plus couramment, ils sont suspendus au-dessous des ailes par des mats de support, mais ils peuvent aussi être fixés à l'arrière du fuselage par des mats ou au niveau de l'empennage.

Lors du déplacement dans l'air de l'aéronef, ses surfaces externes influent sur l'écoulement de l'air. En particulier, lors du déplacement d'un profil aérodynamique dans l'air, une couche limite se crée à la surface de ce profil aérodynamique. Cette couche limite correspond à une zone dans laquelle la vitesse d'écoulement de l'air est ralentie par la viscosité de l'air en contact avec les surfaces du profil.

En général, les groupes propulseurs sont configurés de façon à ne pas aspirer cette couche limite se créant sur les surfaces aérodynamiques de l'aéronef. Pour cela les groupes propulseurs sont le plus communément montés afin que leur entrée d'air soit située dans un flux d'air libre, c'est-à-dire peu ou pas perturbé par les surfaces de l'aéronef. C'est le cas lorsque par exemple les groupes propulseurs sont suspendus sous la voilure ou à distance du fuselage sur la partie arrière d'un aéronef.

Néanmoins, l'ingestion par le groupe propulseur de cette couche limite présente certains avantages améliorant l'efficacité de la propulsion de ces aéronefs et réduisant leur consommation spécifique, c'est-à-dire la consommation de carburant rapportée à la masse de l'aéronef. Afin de profiter de ces avantages un groupe propulseur peut ainsi être configuré pour ingérer la couche limite. De tels groupes propulseurs sont généralement désignés par l'acronyme BLI pour « Boundary Layer Ingestion ». Une possible configuration d'un groupe propulseur de type BLI sur un aéronef est son implantation en partie arrière du fuselage.

Un exemple de groupe propulseur BLI implanté en partie arrière de fuselage est décrit dans la demande de brevet US-A1-2017/0081013 ainsi que dans la demande de brevet EP3153401. Dans la suite, les positions axiales relatives des composants du groupe propulseur seront indiquées par rapport à la direction du flux de gaz de propulsion le traversant. Un groupe propulseur d'aéronef tel que décrit dans le document de l'art antérieur US2017/0081013 référencé ci-dessus, comporte une unité motrice présentant une partie statique et une partie rotative et une soufflante présentant des aubes de soufflante et entrainée en rotation par la partie rotative de l'unité motrice. La soufflante est située en aval de l'unité motrice. On trouve également un ensemble d'aubes fixes situé en aval de la soufflante, et une nacelle présentant dans sa partie intérieure au niveau de la soufflante et de l'ensemble d'aubes fixes un carter de soufflante. La demande de brevet EP3121430 décrit également un carter de soufflante à l'intérieur d'une nacelle.

Dans cette configuration, la nacelle est reliée mécaniquement au fuselage de l'aéronef par des tirants structurels généralement carénés et situés en amont de la soufflante. Les charges provenant de la nacelle et de l'ensemble d'aubes fixes sont transmises au fuselage par les tirants structurels qui doivent être dimensionnés en conséquence. Ainsi sous l'effet des contraintes aérodynamiques importantes exercées sur la nacelle et l'ensemble d'aubes fixes, ceux-ci se déplacent par rapport au fuselage et à la soufflante du fait de la déformation des tirants structurels. En conséquence, l'écart entre l'extrémité des aubes de la soufflante et le carter de soufflante, peut varier considérablement sur la périphérie de la soufflante en fonction des conditions et des phases de vol de l'aéronef. Le manque de rigidité de l'ensemble formé par la nacelle, l'ensemble d'aubages fixes et la soufflante, implique que le jeu entre l'extrémité des aubes de la soufflante et le carter de soufflante doit être suffisamment important pour accepter ces déformations sans risque de frottement des aubes de soufflante sur le carter. L'importance de ce jeu a un impact négatif significatif sur les performances et l'efficacité du groupe propulseur.

L'invention consiste à proposer un groupe propulseur d'aéronef et une partie arrière d'aéronef comportant au moins un groupe propulseur résolvant ce problème.

Ainsi, le groupe propulseur d'aéronef selon l'invention se caractérise en ce qu'il comprend un assemblage d'au moins deux arbres coaxiaux dans lequel un arbre de soufflante relie la soufflante à la partie rotative de l'unité motrice, et un arbre d'aubage fixe relie l'ensemble d'aubes fixes à la partie statique de l'unité motrice et s'étend concentriquement et au moins pour une partie de sa longueur à l'intérieur de l'arbre de soufflante.

L'agencement d'un assemblage d'arbre coaxiaux permet de créer une liaison mécanique entre la soufflante, l'ensemble d'aubes fixes et le carter de la soufflante. L'ensemble soufflante/aubes fixes/carter ainsi réalisé est plus compact et plus rigide que celui de l'art antérieur ce qui limite les déformations sans nécessiter un renforcement des tirants structurels reliant la nacelle à la partie arrière du fuselage.

Dans une configuration particulièrement avantageuse du groupe propulseur d'aéronef, l'assemblage d'arbres coaxiaux comprend en outre un moyeu de soufflante relié à la partie statique de l'unité motrice et s'étendant concentriquement autour de l'arbre de soufflante sur au moins une partie de sa longueur.

De préférence, le groupe propulseur d'aéronef comprend en plus au moins un premier module de paliers montés entre l'arbre d'aubage fixe et l'arbre de soufflante, et un deuxième module de paliers montés entre l'arbre de soufflante et le moyeu de soufflante.

Plus particulièrement, au moins un des premier et deuxième modules de palier comporte au moins un roulement à billes et un roulement à rouleaux.

Avantageusement, l'unité motrice du groupe propulseur d'aéronef comprend un moteur présentant un rotor et un train épicycloïdal relié au rotor du moteur et entrainant en rotation la soufflante. Ledit train épicycloïdal comprend un planétaire d'entrée relié au rotor du moteur, un planétaire de sortie sous forme d'une couronne reliée à l'arbre de soufflante et l'entrainant en rotation, et un porte-satellites fixe relié à la partie statique de l'unité motrice et à l'arbre d'aubage fixe.

Additionnellement, le groupe propulseur d'aéronef comprend une soufflante auxiliaire de rayon réduit, à un ou plusieurs étages, disposée entre ladite soufflante et l'ensemble d'aubes fixes. Ladite soufflante auxiliaire est adaptée à re-pressuriser le flux de gaz de propulsion s'écoulant au niveau des pieds d'aubes de soufflante et des pieds de l'ensemble d'aubes fixes.

De préférence, dans le groupe propulseur d'aéronef, les aubes de soufflante sont montées par leur pied sur un disque de soufflante pour former ladite soufflante. Une extension principalement axiale dudit disque de soufflante s'étend en aval de celui-ci et entraine en rotation ladite soufflante auxiliaire. Un carénage de soufflante auxiliaire entoure la soufflante auxiliaire et est relié à l'ensemble d'aubes fixes.

Avantageusement, dans le groupe propulseur d'aéronef le carter de soufflante situé à l'intérieur de la nacelle est indépendant mécaniquement de la nacelle et est tenu par l'ensemble d'aubes fixes auquel il est relié.

Alternativement, dans le groupe propulseur d'aéronef le carter de soufflante est relié mécaniquement à la nacelle ; et est tenu par l'ensemble d'aubes fixes auquel il est relié ; la nacelle étant ainsi reliée à la partie statique de ladite unité motrice à travers ledit assemblage d'au moins deux arbres coaxiaux, l'ensemble d'aubes fixes et le carter de soufflante.

Avantageusement, un dispositif coulissant est ajouté sur l'arbre d'aubage fixe en amont du premier module de paliers.

Selon un second aspect de l'invention, une partie arrière d'aéronef comprend une partie arrière de fuselage et au moins un groupe propulseur d'aéronef dans laquelle la partie statique de l'unité motrice est reliée mécaniquement à la partie arrière de fuselage. Le carter de soufflante situé à l'intérieur de la nacelle est indépendant mécaniquement de la nacelle et est tenu par l'ensemble d'aubes fixes auquel il est relié. Ainsi, les charges générées par la soufflante, le carter de soufflante et l'ensemble d'aubes fixes sont transmises à la partie arrière de fuselage à travers l'assemblage d'au moins deux arbres coaxiaux. En outre, des tirants structurels relient la nacelle à la partie arrière de fuselages et sont dimensionnés pour ne transmettre que les charges de la nacelle à la partie arrière de fuselage.

Alternativement, le carter de soufflante est relié mécaniquement à la nacelle et est tenu par l'ensemble d'aubes fixes auquel il est relié. La nacelle est ainsi reliée à la partie statique de l'unité motrice à travers l'assemblage d'au moins deux arbres coaxiaux, l'ensemble d'aubes fixes et le carter de soufflante. Ainsi, les charges générées par la soufflante, la nacelle, le carter de soufflante et l'ensemble d'aubes fixes sont transmises à la partie arrière de fuselage à travers l'assemblage d'au moins deux arbres coaxiaux.

D'autres caractéristiques et avantages de l'invention sont mis en évidence par la description ci-après d'exemples non-limitatifs de réalisation des différents aspects de l'invention. La description se réfère aux figures annexées qui sont aussi données à titre d'exemples de réalisation non limitatifs de l'invention :
- La figure 1a représente une vue de côté en demi coupe d'un premier mode de réalisation d'un groupe propulseur selon l'invention ;
- La figure 1b représente une demi vue de côté en coupe d'un mode alternatif de réalisation d'un groupe propulseur selon l'invention ;
- La figure 2 représente une vue de détail de l'assemblage d'axes coaxiaux dans un groupe propulseur tel que représenté dans les vues de côté en demi coupe des figures 1a et 1b ;
- La figure 3 illustre une demi vue de côté en coupe d'un groupe propulseur selon un mode de réalisation de l'invention équipé d'une soufflante auxiliaire ; et
- La figure 4 illustre une demi vue de côté en coupe d'un groupe propulseur équipé d'une soufflante auxiliaire.

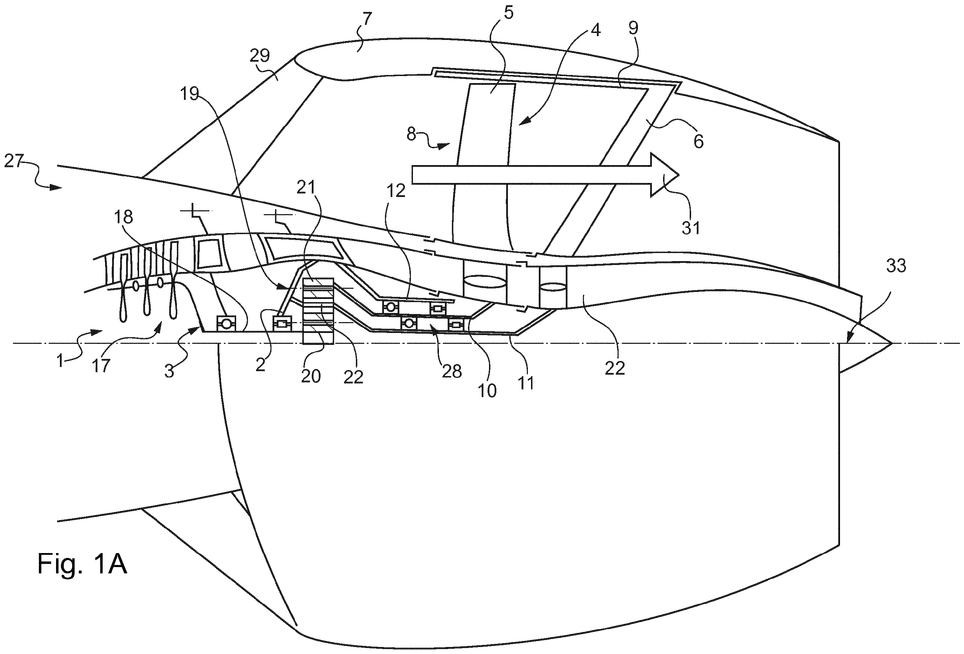

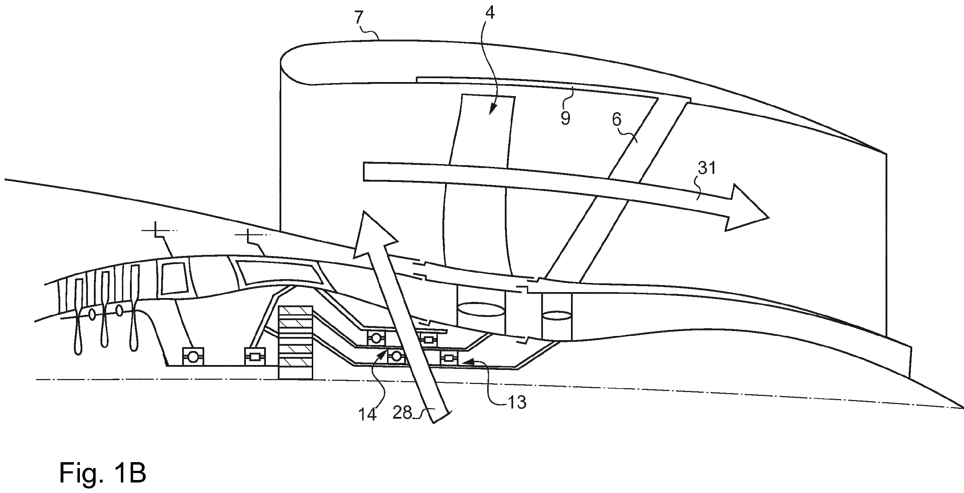

La figure 1 a représente un groupe propulseur pour aéronef à ingestion de couche limite aussi appelé groupe propulseur BLI. BLI est l'acronyme de Boundary Layer Ingestion. Dans la suite, les positions axiales relatives des composants du groupe propulseur seront indiquées par rapport à la direction du flux de gaz de propulsion le traversant.

Typiquement, un tel groupe propulseur comporte une unité motrice 1 comprenant un moteur 17 situé en partie arrière du fuselage 27. Le moteur présente un rotor 18 qui est en général couplé à une boite de vitesse. La sortie de la boite de vitesse est reliée à un arbre de soufflante 10 pour entrainer en rotation une soufflante 4. La boite de vitesse peut être un train épicycloïdal 19, comme indiqué dans les figures, ou tout autre système de transmission permettant d'adapter la vitesse de rotation de l'arbre de soufflante 10 à celle du rotor 18. Le moteur 17 peut-être une turbo machine, un turbo réacteur, comme c'est le plus souvent le cas, ou tout autre type de moteur tel que par exemple un moteur électrique. Dans les groupes propulseurs de type BLI montés en partie arrière du fuselage 27, le moteur est situé dans la partie arrière du fuselage. La soufflante 4 est située en aval du moteur 17 et est logée dans une nacelle 7 qui présente un conduit intérieur 8 dans lequel l'air est aspiré par la soufflante 4. Un carter de soufflante 9 faisant face aux aubes de soufflante 5 est agencé dans le conduit intérieur 8 de la nacelle 7. Le carter de soufflante 9 est fixé à l'ensemble d'aubes fixes 6. De plus, la nacelle 7 est reliée mécaniquement à la partie arrière du fuselage 27 de l'aéronef par des tirants structurels 29 généralement carénés et situés en amont de la soufflante 4. Un ensemble d'aubes fixes 6 est logé dans le carter de soufflante 9 auquel il est fixé, en aval de la soufflante 4. L'ensemble d'aubes fixes 6 sert à redresser l'écoulement des gaz de propulsion en sortie de soufflante 4 et à soutenir le carter de soufflante 9.

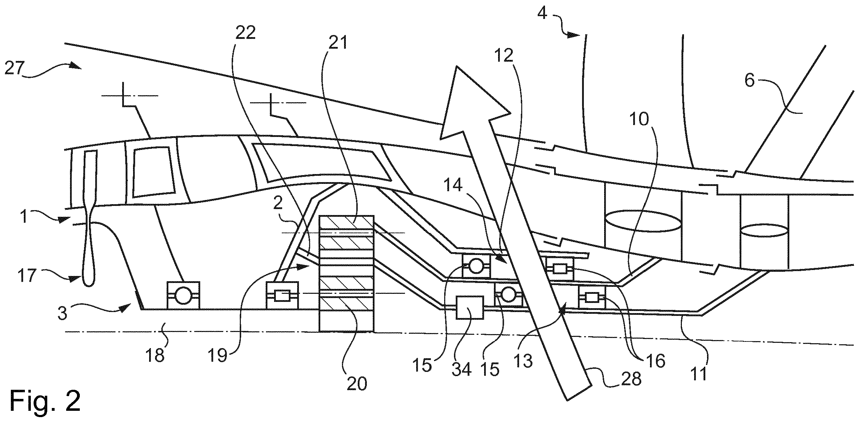

Comme illustré à la figure 2, l'arbre de soufflante 10 qui relie la soufflante 4 à la partie rotative 3 de l'unité motrice 1 pour l'entrainer en rotation, est un arbre présentant un alésage dans lequel s'engage sur une partie principale de sa longueur un arbre d'aubage fixe 11. Ce dernier est relié par une de ses extrémités à la partie statique 2 de l'unité motrice 1 et par l'autre de ses extrémités à l'ensemble d'aubes fixes pour les maintenir statique. Ces deux arbres formant un ensemble d'arbres coaxiaux présentent une configuration compacte et donc moins sujette aux déformations de ces arbres. De plus cette configuration coaxiale particulière permet une liaison mécanique entre ces deux arbres qui produit un ensemble plus rigide, et donc une faible déformation du carter de soufflante 9, de l'ensemble d'aubes fixes 6 et de la soufflante.

Cette configuration coaxiale de l'arbre de soufflante 10 et de l'arbre d'aubage fixe 11 peut être étendue à un moyeu de soufflante 12 relié mécaniquement à la partie statique 2 de l'unité motrice 1. En effet, le moyeu de soufflante 12, qui est directement rattaché à la partie statique du groupe propulseur, entoure l'arbre de soufflante 10 sur une partie de sa longueur. Cette disposition particulière avec l'arbre d'aubage fixe 11 contenu dans l'arbre de soufflante 10, qui est lui-même contenu dans le moyeu de soufflante 12, se révèle particulièrement compacte et rigide. Des arbres plus courts avec moins de porte-à-faux seront moins sensibles aux déformations résultant des charges radiales engendrées par la soufflante 4 et l'ensemble d'aubes fixes 6. Cette configuration d'arbres imbriqués permet également d'obtenir une liaison mécanique rigide entre l'ensemble d'aubes fixes 6, la soufflante 4 et la partie statique 2 de l'unité motrice 1 qui est reliée à la partie arrière de fuselage 27 de l'aéronef. Cet exemple d'agencement de l'assemblage d'arbres coaxiaux présente l'avantage de produire une structure soufflante 4/ensemble d'aubes fixes 6/carter de soufflante 9 particulièrement rigide et compacte dans lequel les moments de rotation autour de l'axe de l'assemblage des arbres coaxiaux générés par l'ensemble d'aubes fixes 6 et la soufflante 4 sont transmis à travers les arbres d'aubage fixe 11 et l'arbre de soufflante 10 au train épicycloïdal et toutes les autres charges induites par cette structure sont transmises au moyeu de soufflante 12. Le moyeu de soufflante 12 étant le plus extérieur des arbres agencés coaxialement, son diamètre est le plus grand ce qui renforce l'effet d'encastrement de l'assemblage d'arbres coaxiaux qui présente un porte-à-faux réduit du fait de la compacité de cet assemblage. Cet agencement permet de limiter substantiellement les possibilités de déformation et donc de déplacement de cette structure par rapport à la partie arrière du fuselage et entre la soufflante 4 et l'ensemble d'aubes fixes 6 et le carter de soufflante.

Dans l'assemblage d'arbres coaxiaux, un premier module de paliers 13 est monté sur l'arbre d'aubage fixe 11 et dans un premier alésage formé à l'intérieur de l'arbre de soufflante 10. Ce premier module de paliers 13 guide en rotation l'arbre de soufflante 19 autour de l'arbre d'aubage fixe 11. En présence d'un moyeu de soufflante 12, un deuxième module de paliers 14 est monté dans un deuxième alésage formé à l'intérieur du moyeu de soufflante 12 et sur l'arbre de soufflante 10 afin de guider celui-ci en rotation à l'intérieur du moyeu de soufflante 12. Sous cette forme, d'une part l'assemblage des arbres coaxiaux permet d'obtenir un ensemble soufflante/aubes fixes particulièrement compact et rigide et mécaniquement relié au fuselage de sorte que les déformations entre la soufflante 4, l'ensemble d'aubes fixes 6, le carter de soufflante et la partie arrière du fuselage 27 sont fortement réduites par rapport aux assemblages connus de l'art antérieur. D'autre part, l'assemblage d'arbres coaxiaux ainsi réalisé est particulièrement adapté à transmettre efficacement à la partie arrière du fuselage les charges engendrées par la soufflante principale et l'ensemble d'aubes fixes qui sont reprises par les modules de paliers.

Plusieurs types de paliers peuvent constituer les premier et deuxième modules de paliers 13, 14. Selon un mode préférentiel de mise en œuvre de l'invention, les premier et deuxième modules de paliers 13, 14 sont chacun constitués d'un roulement à billes 15 et d'un roulement à rouleaux 16. D'autres variantes sont possibles telles que l'utilisation de roulements coniques montés en X ou en O, ou même une combinaison de roulements à rouleaux avec une butée à billes. Dans la configuration de paliers du mode de réalisation de l'invention qui est décrit, la plus grande partie des charges axiales provenant de la soufflante 4 sont reprises par les roulements à billes 15 qui font office de butées axiales pour l'arbre de soufflante, alors que les charges radiales provenant de la soufflante 4 et de l'ensemble d'aubes fixes 6 sont reprises par les roulements à rouleaux 16 et pour une moindre partie par les roulements à billes 15.

Additionnellement, les charges axiales générées par l'ensemble d'aubes fixes 6 et l'arbre d'aubage fixe 11 peuvent être compensées par un déplacement axial de l'arbre d'aubage fixe. Ce déplacement axial peut se faire par l'adjonction d'un dispositif coulissant 34 sur l'arbre d'aubage fixe 11 en amont des paliers ce qui permet d'éviter un montage hyperstatique de l'arbre d'aubage fixe 11 et de compenser les dilatations thermiques longitudinales de celui-ci tout en empêchant l'ensemble d'aubes fixes de tourner.

Dans l'unité motrice du groupe propulseur, la boite de vitesse connectée à l'extrémité du rotor 18 du moteur 17 est avantageusement constituée par un train épicycloïdal 19. Le train épicycloïdal 19 est constitué premièrement d'un planétaire d'entrée 20 relié au rotor 18 du moteur 17, deuxièmement d'un planétaire de sortie formée par une couronne 21 à denture intérieure reliée mécaniquement à l'arbre de soufflante 4 qu'elle entraîne en rotation, et troisièmement d'un porte-satellites fixe 22 sur lequel sont montés les satellites qui transmettent le mouvement de rotation du planétaire d'entrée 20 à la couronne 21. D'un côté le porte-satellites 22 est relié à la partie statique 2 de l'unité motrice 1 et donc au fuselage, et de l'autre côté il est relié à l'arbre d'aubage fixe 11 par le dispositif coulissant 34 permettant le glissement axial mais pas la rotation entre le porte-satellites 22 et l'arbre d'aubage fixe 11, Cet agencement particulier d'un train épicycloïdal en sortie de moteur permet d'obtenir une configuration naturellement rigide et compacte de l'assemblage d'arbre coaxiaux liés aux principaux organes du groupe propulseur tout en bloquant la rotation de l'ensemble d'aubes fixes. Bien entendu, d'autres dispositifs permettant d'adapter la vitesse de l'arbre de soufflante 10 à celle du rotor 18 du moteur 17 peuvent être mis en œuvre de même que d'autres configurations d'un train épicycloïdal ayant par exemple une autre partie fixe que le porte-satellites.

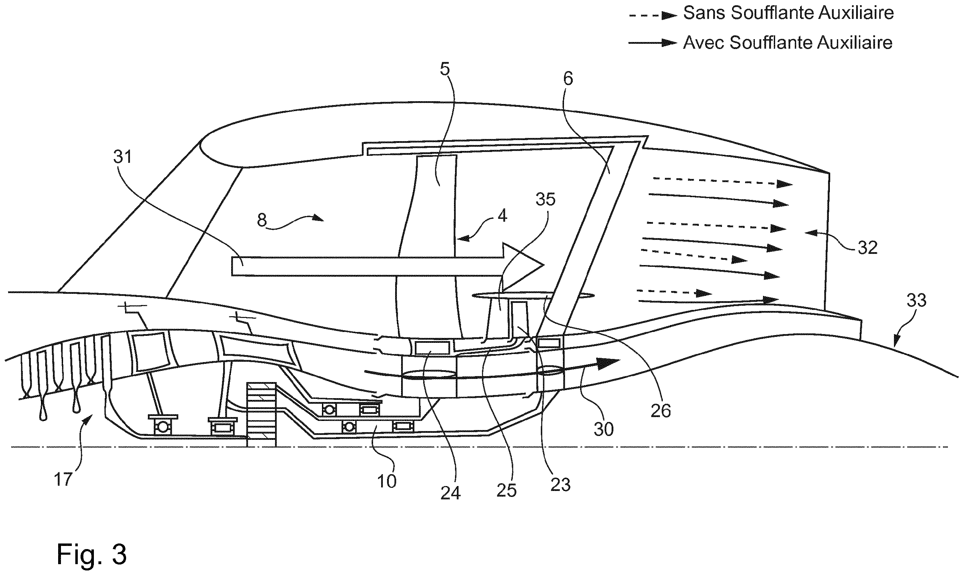

Par ailleurs, dans un groupe propulseur, on distingue deux flux de gaz de propulsion lorsque le moteur est une turbo machine, notamment un turboréacteur. Comme illustré à la figure 3, un flux primaire 30 de gaz de propulsion s'écoule au travers du compresseur et de la chambre de combustion du turboréacteur alors qu'un flux secondaire 31 de gaz de propulsion s'écoule au travers de la soufflante 4 et de l'ensemble d'aubes fixes 6. L'aérodynamique des ensembles « soufflante/aubes fixes » est généralement conçue pour des groupes propulseurs conventionnels. Lorsqu'ils sont transposés dans une configuration de type BLI, comme c'est le cas dans le document de l'art antérieur cité plus avant, des problèmes d'optimisation apparaissent. Un de ces problèmes concerne le traitement de la partie du flux secondaire s'écoulant dans une région localisée au niveau des pieds des aubes de soufflante 5 et des pieds de l'ensemble d'aubes fixes 6. En effet, cette partie du flux secondaire 31 des gaz de propulsion est une zone de couche limite à plus faible vitesse d'écoulement des gaz de propulsion qui entraîne des difficultés pour la soufflante à pressuriser cette partie du flux secondaire entrant des gaz de propulsion au même niveau que sur le pourtour extérieur des aubes de soufflante 5. Le taux de pressurisation de la soufflante 4, aussi appelé Fan Pressure Ratio ou FPR, plus faible au pied de ses aubes 5 a un impact négatif sur l'efficacité propulsive du groupe propulseur et notamment des groupes propulseurs de type BLI. En outre, il s'en trouve que la trainée de l'aéronef n'est pas optimale ce qui se traduit par une surconsommation en carburant.

Ce problème est solutionné en augmentant le taux de pressurisation dans la zone des pieds d'aubage afin d'obtenir un FPR plus élevé de la soufflante 4, des pieds aux extrémités des aubes de soufflante 5.

A cette fin, comme représenté à la figure 3, une soufflante auxiliaire 23 est installée entre la soufflante 4 et l'ensemble d'aubes fixes 6 dans la zone située au pied des aubes de soufflante 5 et de l'ensemble d'aubes fixes 6. Cette soufflante auxiliaire présente un diamètre extérieur inférieur à celui de la soufflante 4. La soufflante auxiliaire peut être à un étage de compression comme illustré à la figure 3 ou à plusieurs étages de compression. Un carénage de soufflante auxiliaire 26 sous la forme d'une structure profilée entoure la soufflante auxiliaire 23. A l'extrémité amont de ce carénage de soufflante auxiliaire 26, un redresseur statique 35 est monté en amont de la soufflante auxiliaire 23. Le carénage de soufflante auxiliaire 26 qui est statique, est lié mécaniquement à l'ensemble d'aubes fixes 6. La soufflante auxiliaire 23 est quant à elle reliée mécaniquement à la soufflante 4 afin que cette dernière l'entraîne en rotation. Cette liaison mécanique peut être réalisée par une extension axiale 25 d'un disque de soufflante 24 sur lequel sont fixés par leur pied les aubes de soufflante 5, ou par tout autre moyen. Cette extension axiale 25 s'étend vers l'aval du disque de soufflante 24 et les pieds des aubes de la soufflante auxiliaire 23 y sont fixés. Ainsi l'arbre de soufflante 10 entraine en rotation la soufflante 4 par le disque de soufflante 24, auquel il est relié mécaniquement, et le disque de soufflante 24 entraîne en rotation la soufflante auxiliaire 23 par son extension axiale 25 qui les relie mécaniquement.

Sans soufflante auxiliaire la vitesse du flux secondaire 31 des gaz de propulsion dans une région annulaire d'un plan d'éjection 32 décroit en s'approchant du rayon intérieur du conduit intérieur 8, le flux secondaire 31 y subissant l'effet de la viscosité de la couche limite tout le long du fuselage jusqu'à sa partie extrême arrière formant un cône d'éjection 33. Au contraire, avec la soufflante auxiliaire 23, la vitesse du flux secondaire 31 des gaz de propulsion est homogénéisée sur toute la région annulaire 32 en sortie du groupe propulseur 32, augmentant ainsi les efficacités propulsives du groupe propulseur.

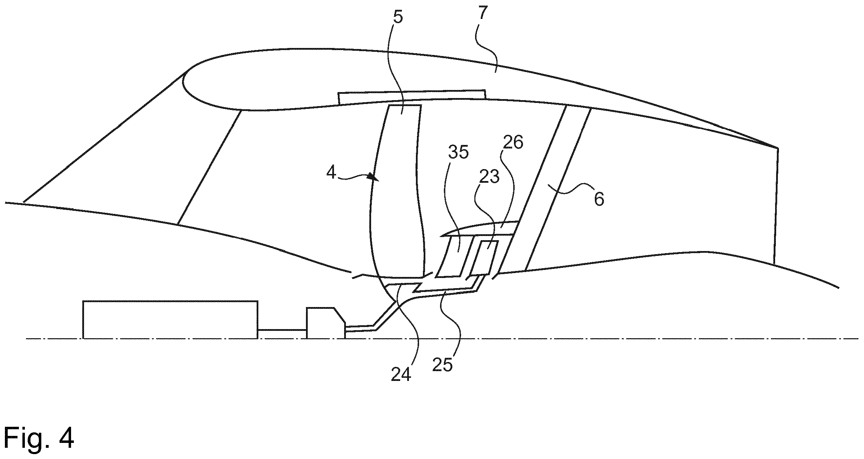

Comme illustré à la figure 3, la configuration particulière de la soufflante auxiliaire 23 décrite ci-dessus se combine avantageusement à l'assemblage des arbres coaxiaux décrit ci-avant en contribuant à sa compacité et sans en détériorer la rigidité. Néanmoins, une structure de soufflante auxiliaire 23, telle que décrite précédemment, peut parfaitement être intégrée à d'autres types de groupes propulseurs d'aéronef qu'ils soient de type BLI ou conventionnel, suspendus aux ailes ou situés en partie arrière de fuselage. A titre d'exemple, la figure 4 montre l'implantation d'une soufflante auxiliaire 23 telle que décrite ci-dessus sur un groupe propulseur similaire à celui décrit dans le document de l'art antérieur cité ci-avant.

Un groupe propulseur tel que décrit ci-dessus peut être implanté de différentes façons sur un aéronef. Dans la suite, le groupe propulseur est décrit dans une configuration en partie arrière du fuselage d'un aéronef. Dans cette configuration le moteur 17 de l'unité motrice 1 est essentiellement inclus dans la partie arrière du fuselage 27. Comme indiqué ci-avant, le moteur 17 peut être un turboréacteur, dont la partie arrière, c'est-à-dire principalement le cône d'éjection 33, peut former l'extrémité arrière du fuselage de l'aéronef. C'est le cas notamment pour les groupes propulseurs de type BLI et plus particulièrement mais pas exclusivement pour les groupes propulseurs arrières d'aéronefs appelés BLI 360°. La partie arrière du fuselage de tels aéronefs peut comprendre un ou plusieurs groupes propulseurs tels que décrit ci-dessus.

Ci-après, une première variante de réalisation de l'invention avec un groupe propulseur de type BLI 360° monté dans la partie arrière du fuselage 27 d'un aéronef est décrite à l'aide de la figure 1a. Dans cette première variante, le moteur 17 du groupe propulseur est un turboréacteur. La partie statique 2 de l'unité motrice 1 est reliée mécaniquement à la partie arrière de fuselage 27. Les charges 28 générées par la soufflante 4 et l'ensemble d'aubes fixes 6 sont transmises au fuselage de l'aéronef à travers l'assemblage d'arbres coaxiaux par les premier et deuxième modules de paliers 13, 14 comme décrit ci-avant. Il s'agit principalement des charges radiales générées par la soufflante 4 et l'ensemble d'aubes fixes 6 et des charges axiales générées par la soufflante 4. Les moments autour de l'axe de rotation de la soufflante 4 et de l'axe de l'ensemble d'aubes fixes 6 sont transmis à travers l'arbre de soufflante 10 et l'arbre d'aubage fixe 11 à la couronne 21 et au porte satellite 22 du train épicycloïdal 19. Quant à lui, le carter de soufflante 9 n'est pas relié mécaniquement à la nacelle 7.

Dans cette configuration particulière, l'assemblage d'arbres coaxiaux étant relié au fuselage, les charges provenant de la soufflante 4, de l'ensemble d'aubes fixes 6 et du carter de soufflante 9 sont transmises à la partie arrière du fuselage 27 par cet arrangement particulièrement rigide et compact. Il en découle une réduction significative des déformations de cette partie du groupe propulseur. Cela réduit d'autant le jeu à prévoir entre l'extrémité des aubes de soufflante 5 et le carter de soufflante, augmentant ainsi l'efficacité de la soufflante. Cela contribue donc directement à l'optimisation du fonctionnement du groupe propulseur.

Des tirants structurels 29 relient mécaniquement la nacelle 7 à la partie arrière du fuselage 27. Ces tirants structurels 29 sont carénés car ils sont situés à l'entrée du conduit intérieur 8 par lequel la soufflante 4 aspire le flux secondaire 31 des gaz de propulsion. Les charges radiales et axiales générées par l'ensemble d'aubes fixes 6 transitant par l'assemblage d'arbres coaxiaux à travers les premier et deuxième modules de paliers 13, 14, les tirants structurels 29 doivent être dimensionnés pour ne supporter que les contraintes aérodynamiques agissant sur la nacelle. Leurs dimensions peuvent donc être inférieures à celles des tirants structurels conventionnels. Leur volume réduit a donc une moindre incidence sur l'écoulement du flux secondaire 31 en aval de la soufflante 4 ce qui optimise l'efficacité propulsive du groupe propulseur ainsi conçu.

Une deuxième variante de réalisation de l'invention est décrite ci-dessous et illustrée à la figure 1b. Cette deuxième variante de réalisation de l'invention se distingue de la précédente en ce que la nacelle 7 est reliée mécaniquement à l'ensemble d'aubes fixes 6. Dans cette configuration le carter de soufflante 9 fait partie intégrante de la nacelle 7 ou y est au moins relié mécaniquement. Ainsi les contraintes aérodynamiques subies par la nacelle 7 s'ajoutent aux charges 28 générées par la soufflante 4 et l'ensemble d'aubes fixes 6 qui sont transmises à la partie arrière du fuselage 27 par l'assemblage d'arbres coaxiaux à travers les premier et deuxième modules de paliers 13, 14. Le transfert à la partie arrière du fuselage 27 de toutes les charges des principaux composants du groupe propulseur, c'est-à-dire de la nacelle 7, de la soufflante 4 et de l'ensemble d'aubes fixes 6, à travers l'assemblage des arbres coaxiaux et les premier et deuxième modules de paliers 13, 14, est rendu possible du fait de la compacité et de la rigidité accrue obtenues par cet assemblage particulier selon l'invention. La fixation de la nacelle 7 directement à l'ensemble d'aubes fixes 6 rend la présence de tirants structurels en amont de la soufflante superflue. Ainsi l'incidence de ceux-ci sur l'écoulement du flux secondaire 31 de gaz de propulsion en amont de la soufflante est éliminée et l'efficacité du groupe propulseur en est optimisée.

Dans toutes les variantes de l'invention, la combinaison de l'assemblage d'arbres coaxiaux, incluant l'arbre d'aubage fixe et l'arbre de soufflante, avec la liaison mécanique entre le carter et l'ensemble d'aubes fixes permet d'optimiser le jeu entre l'extrémité des aubes de soufflante et le carter en réduisant les déplacements entre la soufflante et le carter. Ce résultat est obtenu par la rigidification de l'ensemble soufflante/carter/aubes fixes obtenues indépendamment et complémentairement d'une part par l'assemblage d'arbres coaxiaux et d'autre part par la liaison entre le carter et l'ensemble d'aubes fixes. La combinaison de ces deux effets permet d'obtenir un ensemble particulièrement rigide et donc moins sujet aux déformations.

L'invention propose d'une part une structure particulièrement compacte et rigide de la structure formée par la soufflante 4, le carter de soufflante et l'ensemble d'aubes fixes 6 qui permet de réduire le jeu entre les extrémités des aubes de soufflante 5 et le carter de soufflante 9, sur la base d'un assemblage mécanique d'arbres coaxiaux. Cet assemblage permet d'optimiser la structure des groupes de propulsion de type BLI et plus spécifiquement de ceux du type BLI 360° en réduisant le jeu nécessaire entre les aubes de soufflante 5 et le carter de soufflante 9 et de réduire la taille des tirants structurels 26. D'ailleurs, ces tirants structurels 26 peuvent être éliminés lorsque le carter de soufflante 9 est relié mécaniquement à l'ensemble d'aubes fixes 6. D'autre part, l'insertion d'une soufflante auxiliaire 23 entre la soufflante 4 et l'ensemble d'aubes fixes 6 permet d'augmenter l'efficacité propulsive du groupe propulseur en augmentant la pressurisation du flux de gaz de propulsion au pied des aubes de soufflantes 5 et des aubes fixes 6 et donc d'augmenter l'efficacité propulsive et de diminuer la trainée générée par un ensemble groupe propulseur/aéronef, en particulier du type BLI.

La combinaison des avantages obtenus par les différents aspects de l'invention permet d'obtenir une réduction de consommation pour un aéronef ainsi équipé pouvant aller de 2 à 4% comparée à celle d'un aéronef équipé d'un propulseur de type BLI conventionnel.

Bien que dans la description ci-dessus, les aspects particuliers de l'invention, notamment l'assemblage d'arbres coaxiaux compact et rigide et l'insertion d'une soufflante auxiliaire entre la soufflante et l'ensemble d'aubes fixes, aient été décrits dans le contexte d'un groupe de propulseur de type BLI positionné en partie arrière de fuselage, plus particulièrement d'un groupe propulseur de type BLI 360°, ils pourraient être mis en œuvre dans d'autres configurations et d'autres types de groupe propulseur.

## Revendications

1. Groupe propulseur d'aéronef comprenant :
- une unité motrice (1) présentant une partie statique (2) et une partie rotative (3),
- une soufflante (4) présentant des aubes de soufflante (5), entrainée en rotation par ladite partie rotative (3) et située en aval de l'unité motrice (1);
- un ensemble d'aubes fixes (6) situé en aval de la soufflante (4) ;
- une nacelle (7) ; et
- un assemblage d'au moins deux arbres coaxiaux dans lequel :
- un arbre de soufflante (10) relie la soufflante (4) à la partie rotative (3) de l'unité motrice (1); et
- un arbre d'aubage fixe (11) s'étend concentriquement et au moins pour une partie de sa longueur à l'intérieur de l'arbre de soufflante (10),
**caractérisé en ce que** :
- la nacelle présente dans sa partie intérieure un carter de soufflante (9) au niveau de la soufflante (4) et de l'ensemble d'aubes fixes (6) ; et
- l'arbre d'aubage fixe (11) relie l'ensemble d'aubes fixes (6) à la partie statique (2) de l'unité motrice (1).

2. Groupe propulseur d'aéronef selon la revendication 1, **caractérisé en ce que** l'assemblage d'arbres coaxiaux comprend en outre :
- un moyeu de soufflante (12) relié à la partie statique (2) de l'unité motrice (1) et s'étendant concentriquement et autour de l'arbre de soufflante (10) sur au moins une partie de sa longueur.

3. Groupe propulseur d'aéronef selon la revendication 2, **caractérisé en ce qu'**il comprend en outre au moins :
- un premier module de paliers (13) montés entre l'arbre d'aubage fixe (11) et l'arbre de soufflante (10); et
- un deuxième module de paliers (14) montés entre l'arbre de soufflante (10) et le moyeu de soufflante (12).

4. Groupe propulseur d'aéronef selon l'une quelconque des revendications précédentes, caractérisé en que l'unité motrice comprend :
- un moteur (17) présentant un rotor (18); et
- un train épicycloïdal (19) relié au rotor (18) du moteur (17) et entrainant en rotation la soufflante (4), ledit train épicycloïdal (19) comprenant :
- un planétaire d'entrée (20) relié au rotor (18) du moteur (17)
- un planétaire de sortie sous forme d'une couronne (21) reliée à l'arbre de soufflante (10); et
- un porte-satellite fixe (22) relié à la partie statistique (2) de l'unité motrice (1) et à l'arbre d'aubage fixe (11).

5. Groupe propulseur d'aéronef selon l'une quelconque des revendications précédentes **caractérisé en ce qu'**il comprend en outre :
- une soufflante auxiliaire (23) à un ou plusieurs étages, disposée entre ladite soufflante (4) et l'ensemble d'aubes fixes (6), ladite soufflante auxiliaire (23) étant adaptée à re-pressuriser le flux de gaz de propulsion s'écoulant au niveau des pieds des aubes de soufflante (5) et des pieds de l'ensemble d'aubes fixes (6).

6. Groupe propulseur d'aéronef selon la revendication 5, dans lequel les aubes de soufflante (5) sont montées par leur pied sur un disque de soufflante (24) pour former ladite soufflante (4) ;
**caractérisé en ce qu'**il comprend en outre :
- une extension principalement axiale (25) dudit disque de soufflante (24) s'étendant en aval de celui-ci et entrainant en rotation ladite soufflante auxiliaire (4) ; et
- un carénage de soufflante auxiliaire (26) entourant la soufflante auxiliaire (23) et liée à l'ensemble d'aubes fixes (6).

7. Groupe propulseur d'aéronef selon l'une quelconque des revendications 1 à 6, **caractérisé en ce que** ledit carter de soufflante (9) situé à l'intérieur de la nacelle (7) est indépendant mécaniquement de ladite nacelle (7) et est tenu par ledit ensemble d'aubes fixes (6) auquel il est relié.

8. Groupe propulseur d'aéronef selon l'une quelconque des revendications 1 à 6 dans lequel ledit carter de soufflante (9) est relié mécaniquement à ladite nacelle (7) ; et est tenu par ledit ensemble d'aubes fixes (6) auquel il est relié ; ladite nacelle (7) étant ainsi reliée à ladite partie statique (2) de ladite unité motrice (1) à travers ledit assemblage d'au moins deux arbres coaxiaux, l'ensemble d'aubes fixes (6) et le carter de soufflante (9).

9. Partie arrière d'aéronef comprenant une partie arrière de fuselage et au moins un groupe propulseur d'aéronef selon l'une quelconque des revendications 1 à 6, **caractérisé en ce que** :
- ladite partie statique (2) de l'unité motrice (1) est reliée mécaniquement à ladite partie arrière de fuselage (27);
- ledit carter de soufflante (9) situé à l'intérieur de ladite nacelle (7) est indépendant mécaniquement de ladite nacelle (7) et est tenu par ledit ensemble d'aubes fixes (6) auquel il est relié ;
- les charges (28) générées par ladite soufflante (4), ledit carter de soufflante (9) et ledit ensemble d'aubes fixes (6) étant transmises à la partie arrière de fuselage (27) à travers ledit assemblage d'au moins deux arbres coaxiaux ; et
- des tirants structurels (29) relient la nacelle (7) à la partie arrière de fuselages (27) et sont dimensionnés pour ne transmettre que les charges de la nacelle à la partie arrière de fuselage (27).

10. Partie arrière d'aéronef comprenant une partie arrière de fuselage et au moins un groupe propulseur d'aéronef selon l'une quelconque des revendications 1 à 6, **caractérisé en ce que** :
- la partie statique (2) de l'unité motrice (1) est reliée mécaniquement à la partie arrière de fuselage (27);
- ledit carter de soufflante (9) est relié mécaniquement à ladite nacelle (7) ; et est tenu par ledit ensemble d'aubes fixes (6) auquel il est relié; ladite nacelle (7) étant ainsi reliée à ladite partie statique (2) de ladite unité motrice (1) à travers ledit assemblage d'au moins deux arbres coaxiaux, l'ensemble d'aubes fixes (6) et le carter de soufflante (9) ; et
- les charges (28) générées par ladite soufflante (4), ladite nacelle (7), ledit carter de soufflante (9) et ledit ensemble d'aubes fixes (6) sont transmises à la partie arrière de fuselage (27) à travers ledit assemblage d'au moins deux arbres coaxiaux.

## Patentansprüche

1. Antriebaggregat eines Luftfahrzeugs, welches umfasst:
- eine Antriebseinheit (1), die einen statischen Teil (2) und einen rotierenden Teil (3) aufweist,
- ein Gebläse (4), das Gebläseschaufeln (5) aufweist, von dem rotierenden Teil (3) drehend angetrieben wird und stromabwärts der Antriebseinheit (1) angeordnet ist;
- eine Anordnung von festen Schaufeln (6), die stromabwärts des Gebläses (4) angeordnet ist;
- eine Gondel (7); und
- eine Anordnung aus mindestens zwei koaxialen Wellen, wobei:
- eine Gebläsewelle (10) das Gebläse (4) mit dem rotierenden Teil (3) der Antriebseinheit (1) verbindet; und
- eine Welle der festen Beschaufelung (11) sich konzentrisch mit der Gebläsewelle (10) und wenigstens für einen Teil ihrer Länge im Inneren derselben erstreckt,
**dadurch gekennzeichnet, dass**:
- die Gondel in ihrem inneren Teil ein Gebläsegehäuse (9) am Gebläse (4) und an der Anordnung von festen Schaufeln (6) aufweist; und
- die Welle der festen Beschaufelung (11) die Anordnung von festen Schaufeln (6) mit dem statischen Teil (2) der Antriebseinheit (1) verbindet.

2. Antriebaggregat eines Luftfahrzeugs nach Anspruch 1, **dadurch gekennzeichnet, dass** die Anordnung aus koaxialen Wellen außerdem umfasst:
- eine Gebläsenabe (12), die mit dem statischen Teil (2) der Antriebseinheit (1) verbunden ist und sich konzentrisch mit der Gebläsewelle (10) und um diese herum auf wenigstens einem Teil ihrer Länge erstreckt.

3. Antriebaggregat eines Luftfahrzeugs nach Anspruch 2, **dadurch gekennzeichnet, dass** es außerdem wenigstens umfasst:
- ein erstes Modul von Lagern (13), die zwischen der Welle der festen Beschaufelung (11) und der Gebläsewelle (10) angebracht sind; und
- ein zweites Modul von Lagern (14), die zwischen der Gebläsewelle (10) und der Gebläsenabe (12) angebracht sind.

4. Antriebaggregat eines Luftfahrzeugs nach einem der vorhergehenden Ansprüche, **dadurch gekennzeichnet, dass** die Antriebseinheit umfasst:
- einen Motor (17), der einen Rotor (18) aufweist; und
- ein Planetengetriebe (19), das mit dem Rotor (18) des Motors (17) verbunden ist und das Gebläse (4) drehend antreibt, wobei das Planetengetriebe (19) umfasst:
- ein Eingangssonnenrad (20), das mit dem Rotor (18) des Motors (17) verbunden ist;
- ein Abtriebssonnenrad in Form eines Hohlrades (21), das mit der Gebläsewelle (10) verbunden ist; und
- einen feststehenden Planetenträger (22), der mit dem statischen Teil (2) der Antriebseinheit (1) und mit der Welle der festen Beschaufelung (11) verbunden ist.

5. Antriebaggregat eines Luftfahrzeugs nach einem der vorhergehenden Ansprüche, **dadurch gekennzeichnet, dass** es außerdem umfasst:
- ein Hilfsgebläse (23) mit einer oder mehreren Stufen, das zwischen dem Gebläse (4) und der Anordnung von festen Schaufeln (6) angeordnet ist, wobei das Hilfsgebläse (23) dafür eingerichtet ist, den Strom von Antriebsgasen, der an den Füßen der Gebläseschaufeln (5) und den Füßen der Anordnung von festen Schaufeln (6) strömt, wieder mit Druck zu beaufschlagen.

6. Antriebaggregat eines Luftfahrzeugs nach Anspruch 5, wobei die Gebläseschaufeln (5) mit ihrem Fuß an einer Gebläsescheibe (24) angebracht sind, um das Gebläse (4) zu bilden;
**dadurch gekennzeichnet, dass** es außerdem umfasst:
- eine hauptsächlich axiale Verlängerung (25) der Gebläsescheibe (24), die sich stromabwärts von dieser erstreckt und das Hilfsgebläse (4) drehend antreibt; und
- eine Hilfsgebläseverkleidung (26), die das Hilfsgebläse (23) umgibt und mit der Anordnung von festen Schaufeln (6) verbunden ist.

7. Antriebaggregat eines Luftfahrzeugs nach einem der Ansprüche 1 bis 6, **dadurch gekennzeichnet, dass** das Gebläsegehäuse (9), das sich im Inneren der Gondel (7) befindet, von der Gondel (7) mechanisch unabhängig ist und von der Anordnung von festen Schaufeln (6) gehalten wird, mit der es verbunden ist.

8. Antriebaggregat eines Luftfahrzeugs nach einem der Ansprüche 1 bis 6, wobei das Gebläsegehäuse (9) mit der Gondel (7) mechanisch verbunden ist; und von der Anordnung von festen Schaufeln (6) gehalten wird, mit der es verbunden ist; wobei die Gondel (7) somit mit dem statischen Teil (2) der Antriebseinheit (1) über die Anordnung aus mindestens zwei koaxialen Wellen, die Anordnung von festen Schaufeln (6) und das Gebläsegehäuse (9) verbunden ist.

9. Hinterer Teil eines Luftfahrzeugs, welcher ein Rumpfhinterteil und wenigstens ein Antriebaggregat eines Luftfahrzeugs nach einem der Ansprüche 1 bis 6 umfasst, **dadurch gekennzeichnet, dass**:
- der statische Teil (2) der Antriebseinheit (1) mit dem Rumpfhinterteil (27) mechanisch verbunden ist;
- das Gebläsegehäuse (9), das sich im Inneren der Gondel (7) befindet, von der Gondel (7) mechanisch unabhängig ist und von der Anordnung von festen Schaufeln (6) gehalten wird, mit der es verbunden ist;
- die Lasten (28), die von dem Gebläse (4), dem Gebläsegehäuse (9) und der Anordnung von festen Schaufeln (6) erzeugt werden, über die Anordnung aus mindestens zwei koaxialen Wellen auf das Rumpfhinterteil (27) übertragen werden; und
- Strukturzugstangen (29) die Gondel (7) mit dem Rumpfhinterteil (27) verbinden und so bemessen sind, dass sie nur die Lasten der Gondel auf das Rumpfhinterteil (27) übertragen.

10. Hinterer Teil eines Luftfahrzeugs, welcher ein Rumpfhinterteil und wenigstens ein Antriebaggregat eines Luftfahrzeugs nach einem der Ansprüche 1 bis 6 umfasst, **dadurch gekennzeichnet, dass**:
- der statische Teil (2) der Antriebseinheit (1) mit dem Rumpfhinterteil (27) mechanisch verbunden ist;
- das Gebläsegehäuse (9) mit der Gondel (7) mechanisch verbunden ist; und von der Anordnung von festen Schaufeln (6) gehalten wird, mit der es verbunden ist; wobei die Gondel (7) somit mit dem statischen Teil (2) der Antriebseinheit (1) über die Anordnung aus mindestens zwei koaxialen Wellen, die Anordnung von festen Schaufeln (6) und das Gebläsegehäuse (9) verbunden ist; und
- die Lasten (28), die von dem Gebläse (4), der Gondel (7), dem Gebläsegehäuse (9) und der Anordnung von festen Schaufeln (6) erzeugt werden, über die Anordnung aus mindestens zwei koaxialen Wellen auf das Rumpfhinterteil (27) übertragen werden.

## Claims

1. Aircraft propulsion unit comprising:
- a drive unit (1) with a static part (2) and a rotary part (3),
- a fan (4) with fan blades (5) which is rotated by the said rotary part (3), and is situated downstream from the drive unit (1);
- an assembly of fixed blades (6) situated downstream from the fan (4);
- a nacelle (7); and
- an assembly of at least two coaxial shafts, wherein:
- a fan shaft (10) connects the fan (4) to the rotary part (3) of the drive unit (1); and
- a stator blading shaft (11) extends concentrically, and for at least part of its length, in the interior of the fan shaft (10),
**characterised in that**:
- the nacelle has a fan housing (9) in its inner part at the fan (4) and the assembly of fixed blades (6); and
- the stator blading shaft (11) connects the assembly of fixed blades (6) to the static part (2) of the drive unit (1).

2. Aircraft propulsion unit according to Claim 1, **characterised in that** the assembly of coaxial shafts also comprises:
- a fan hub (12) which is connected to the static part (2) of the drive unit (1), and extends concentrically and around the fan shaft (10) over at least part of its length.

3. Aircraft propulsion unit according to Claim 2, **characterised in that** it additionally comprises at least:
- a first module of bearings (13) mounted between the stator blading shaft (11) and the fan shaft (10); and
- a second module of bearings (14) mounted between the fan shaft (10) and the fan hub (12).

4. Aircraft propulsion unit according to any one of the preceding claims, **characterised in that** the drive unit comprises:
- a motor (17) with a rotor (18); and
- a planetary gear train (19) which is connected to the rotor (18) of the motor (17) and rotates the fan (4), the said planetary gear train (19) comprising:
- an input planet wheel (20) which is connected to the rotor (18) of the motor (17);
- an output planet wheel which is in the form of a crown (21) connected to the fan shaft (10); and
- a fixed planet carrier (22) which is connected to the static part (2) of the drive unit (1) and to the stator blading shaft (11).

5. Aircraft propulsion unit according to any one of the preceding claims, **characterised in that** it also comprises:
- an auxiliary fan (23) with one or a plurality of stages, disposed between the said fan (4) and the assembly of fixed blades (6), the said auxiliary fan (23) being designed to re-pressurise the flow of propulsion gas flowing at the roots of the fan blades (5) and the roots of the assembly of fixed blades (6).

6. Aircraft propulsion unit according to Claim 5, wherein the fan blades (5) are mounted via their root on a fan disc (24) in order to form the said fan (4); **characterised in that** it additionally comprises:
- a mainly axial extension (25) of the said fan disc (24) extending downstream from the latter and rotating the said auxiliary fan (4); and
- an auxiliary fan fairing (26) surrounding the auxiliary fan (23), and connected to the assembly of fixed blades (6).

7. Aircraft propulsion unit according to any one of Claims 1 to 6, **characterised in that** the said fan housing (9) situated in the interior of the nacelle (7) is mechanically independent from the said nacelle (7), and is retained by the said assembly of fixed blades (6) to which it is connected.

8. Aircraft propulsion unit according to any one of Claims 1 to 6, wherein the said fan housing (9) is connected mechanically to the said nacelle (7); and is retained by the said assembly of fixed blades (6) to which it is connected; the said nacelle (7) thus being connected to the said static part (2) of the said drive unit (1) by means of the said assembly of at least two coaxial shafts, the assembly of fixed blades (6) and the fan housing (9).

9. Rear aircraft part comprising a rear fuselage part and at least one aircraft propulsion unit according to any one of Claims 1 to 6, **characterised in that**:
- the said static part (2) of the drive unit (1) is connected mechanically to the said rear fuselage part (27);
- the said fan housing (9), which is situated in the interior of the said nacelle (7), is mechanically independent from the said nacelle (7), and is retained by the said assembly of fixed blades (6) to which it is connected;
- the loads (28) which are generated by the said fan (4), the said fan housing (9) and the said assembly of fixed blades (6) being transmitted to the rear fuselage part (27) via the said assembly of at least two coaxial shafts; and
- structural braces (29) connect the nacelle (7) to the rear fuselage part (27), and have dimensions such as to transmit only the loads of the nacelle to the rear fuselage part (27).

10. Rear aircraft part comprising a rear fuselage part and at least one aircraft propulsion unit according to any one of Claims 1 to 6, **characterised in that**:
- the static part (2) of the drive unit (1) is connected mechanically to the rear fuselage part (27);
- the said fan housing (9) is connected mechanically to the said nacelle (7); and is retained by the said assembly of fixed blades (6) to which it is connected; the said nacelle (7) thus being connected to the said static part (2) of the said drive unit (1) by means of the said assembly of at least two coaxial shafts, the assembly of fixed shafts (6) and the fan housing (9); and
- the loads (28) generated by the said fan (4), the said nacelle (7), the said fan housing (9) and the said assembly of fixed blades (6) are transmitted to the rear fuselage part (27) via the said assembly of at least two coaxial shafts.
